# EUROPÄISCHE PATENTSCHRIFT

(11) **EP 0 299 909 B1**
(45) Veröffentlichungstag und Bekanntmachung des Hinweises auf die Patenterteilung: **16.03.1994**
(21) Anmeldenummer: 88730155.4
(22) Anmeldetag: 12.07.1988
(51) Int. Cl.: F24D 3/12

(54) **Raumdecke aus Metallplatten**
Ceiling made of metal plates
Plafond en plaques métalliques

(30) Priorität: 15.07.1987 DE 3723792
(43) Veröffentlichungstag der Anmeldung: 18.01.1989
(73) Patentinhaber: Herbst, Donald, Dipl.-Ing.,, D-12207 Berlin (DE)
(72) Erfinder: Herbst, Donald, Dipl.-Ing.,, D-12207 Berlin (DE)
(74) Vertreter: Pfenning, Meinig & Partner

(56) Entgegenhaltungen:
- DE-A- 3 022 006
- GB-A- 686 358
- US-A- 3 305 003

## Beschreibung

Die Erfindung betrifft eine Raumdecke gemäß dem Oberbegriff des Anspruchs 1.

Es sind Raumdecken zum Beheizen oder Kühlen des Raumes bekannt, bei denen Metallplatten in eine Tragekonstruktion eingehängt und an den Platten oder der Tragekonstruktion Rohre für den Durchlauf eines Heiz- oder Kühlmediums befestigt sind. Um eine hohe Wärme- bzw. Kühlwirkung zu erzielen, soll die Verbindung zwischen den Rohren und den Metallplatten möglichst gleichmäßig fest und gut wärmeleitend sein. Dies gilt insbesondere für den Fall der Kühlung, da hier die Temperaturdifferenzen relativ gering sein müssen, um die Gefahr einer Schwitzwasserbildung auszuschließen. Da die Metallplatten wegen der erforderlichen Handhabbarkeit in ihrer Größe begrenzt sind, haben auch die Rohre, wenn sie vor der Montage an den Metallplatten befestigt wurden, eine entsprechend begrenzte Länge, so daß man eine Vielzahl von Rohrverbindungsstellen erhält. Hierdurch wird die Montage der Decke erschwert und außerdem die Gefahr von Undichtigkeiten erheblich erhöht. Verwendet man durchgehende, sich in einer Richtung über die gesamte Decke erstreckende Rohre, so müssen entweder die Rohre an den montierten Metallplatten oder die Metallplatten an den montierten Rohren befestigt werden. Beide Wege sind sehr arbeitsaufwendig. Ein weiterer wesentlicher Nachteil dieser Konstruktion besteht in der Schwierigkeit der Herausnahme einzelner Metallplatten aus der Decke, um Zugang zu dem Raum oberhalb der Metallplatten zu erhalten oder um einzelne von diesen auszuwechseln. Auch das Auswechseln der Rohre ist äußerst kompliziert.

Aus der Zeitschrift "Gesundheits-Ingenieur", 1962, Heft 5, Seite 150 ist eine aus einzelnen Platten und einer Tragkonstruktion gebildete Metalldecke bekannt, die als Verkleidungs-, Schallschluck-, Lüftungs- und bei Einbau von Heizrohren im Hohlraum als Strahlungsdecke Verwendung finden kann. Diese Heizrohre sind starre Einzelrohre, die mit den Metallplatten nicht in direkter Berührung sind. Um eine ausreichende Heizwirkung zu erzielen, muß daher ein erheblicher Temperaturunterschied zwischen der Heizrohroberfläche und deren Umgebung bestehen. Das gleiche gilt für den Fall, daß diese Rohre zur Kühlung verwendet werden sollen. Dann tritt wegen des großen Temperaturunterschiedes jedoch eine Schwitzwasserbildung an den Rohren auf, so daß eine Kühlung praktisch nicht möglich ist.

Weiterhin bestehen die vorbeschriebenen Probleme bei der Montage.

Es ist daher die Aufgabe der vorliegenden Erfindung, eine aus Metallplatten und einer Tragekonstruktion für diese bestehende Raumdecke, die von einem Heiz- oder Kühlmedium durchströmbare rohrförmige Leitungen zur Erzielung gewünschter Temperaturwerte innerhalb des Raumes trägt, zu schaffen, die sich einfach montieren läßt und auch spätere Reparatur- oder Wartungsarbeiten ohne Schwierigkeiten ermöglicht, wobei trotzdem eine hohe Heiz- bzw. Kühlwirkung erreicht wird.

Diese Aufgabe wird erfindungsgemäß gelöst durch die im kennzeichnenden Teil des Anspruchs 1 angegebenen Merkmale. Vorteilhafte Weiterbildungen der erfindungsgemäßen Raumdecke ergeben sich aus den Unteransprüchen.

Die Erfindung zeichnet sich dadurch aus, daß die rohrförmigen Leitungen als flexible Röhrchen ausgebildet sind, die mattenförmig zusammengefaßt lose auf den Metallplatten direkt aufliegen. Da keine feste Verbindung zwischen den Röhrchen und den Metallplatten besteht, können diese jeweils ausgewechselt werden, ohne daß zunächst eine derartige Verbindung gelöst werden müßte. Auch kann, wenn ein Zugang zu dem Raum oberhalb der Metallplatten erforderlich ist, eine derartige Metallplatte herausgenommen und die darüberliegende Matte aus den Röhrchen zur Seite geklappt und angehoben werden. Die hier verwendeten mattenförmig zusammengefaßten Röhrchen sind beispielsweise aus der DE-PS 31 24 048 bekannt.

Die Röhrchen sind vorzugsweise nur an ihren Vor- und Rücklaufanschlüssen in bezug auf die Raumdecke fixiert, wobei diese Anschlüsse zweckmäßig auf der gleichen Randseite der Raumdecke liegen. Hierdurch ist eine größtmögliche Bewegbarkeit der Röhrchen gegenüber der Raumdecke gewährleistet.

Die Erfindung wird im folgenden anhand von in den Figuren dargestellten Ausführungsbeispielen näher erläutert. Es zeigen:
- Fig. 1: einen senkrechten Schnitt durch einen Teil einer Raumdecke mit einer Metallplatte,
- Fig. 2: einen senkrechten Schnitt durch einen Teil einer Raumdecke mit mehreren Metallplatten, und
- Fig. 3: einen senkrechten Schnitt durch einen Teil einer Raumdecke mit einer Metallplatte und einer wärmedämmenden Schicht.

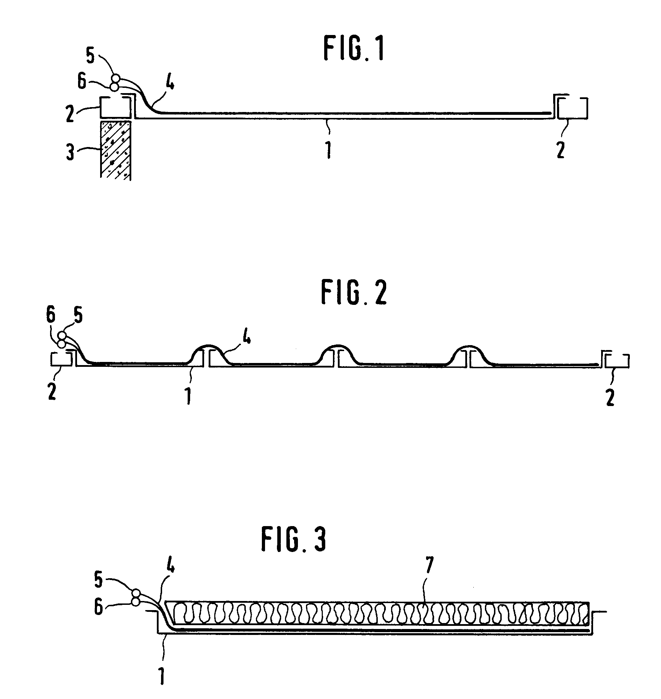

Fig. 1 zeigt eine Metallplatte 1 mit hochgezogenen und abgewinkelten Rändern, so daß sie auf Profilleisten 2 aufliegt, die wiederum auf Raumwänden 3 aufliegen oder in anderer Weise an diesen befestigt sind. Auf der Metallplatte 1 liegen Röhrchen 4 direkt auf. Die Röhrchen 4 bestehen beispielsweise aus Kunststoff und weisen einen Außendurchmesser von etwa 2 mm auf. Sie werden von einem Heiz- oder Kühlmedium durchströmt. Die senkrecht zur Zeichenebene hintereinanderliegenden, zueinander parallelen Röhrchen 4 sind an ihren Enden derart zusammengefaßt, daß die jeweils einen Enden gemeinsam an eine Vorlauf-Sammelleitung 5 und die jeweils anderen Enden gemeinsam an eine Rücklauf-Sammelleitung 6 für das Medium angeschlossen sind. Die Röhrchen 4 werden an der rechten Randseite der Metallplatte 1 um 180° umgebogen und zurückgeführt, so daß die Vorlauf- und die Rücklauf-Sammelleitung auf der gleichen Randseite der Raumdecke liegen. Da die Röhrchen 4 nur über die beiden Sammelleitungen in der Decke fixiert sind, sind sie somit auf der gegenüberliegenden Randseite gegenüber der Raumdecke frei beweglich. Da die Röhrchen 4 nur einen Außendurchmesser von etwa 2 mm besitzen und relativ dicht nebeneinander angeordnet sind, befindet sich eine Vielzahl derartiger Röhrchen in Form einer Matte auf der Metallplatte 1.

Da die Röhrchen 4 direkt auf der Metallplatte 1 aufliegen, findet zwischen diesen ein sehr guter Wärmeübergang statt. Es wird somit durch die gezeigte Anordnung eine hohe Heiz- bzw. Kühlwirkung erreicht, so daß nur relativ geringe Temperaturunterschiede zwischen der Oberfläche der Röhrchen 4 und deren Umgebung erforderlich sind. Durch die Vielzahl der Röhrchen 4 wird auch eine praktisch konstante Temperatur über die gesamte Fläche der Metallplatte 1 erhalten.

Fig. 2 zeigt ebenfalls einen senkrechten Schnitt durch einen Teil einer Raumdecke in Längsrichtung der Röhrchen 4. Ein Unterschied zu Fig. 1 besteht nur insoweit, als mehrere in Längsrichtung der Röhrchen 4 hintereinander angeordnete Metallplatten 1 dargestellt sind, die beispielsweise eine ebene, den gesamten Raum überspannende Fläche bilden können. Dabei sind die Röhrchen 4 an den Übergängen zwischen benachbarten Metallplatten 1 über deren hochgebogene Kanten hinweggeführt. Die Umbiegung der Röhrchen 4 um 180° erfolgt an der rechten Randseite der äußersten rechten Metallplatte 1. Die Verbindung der Metallplatten 1 untereinander ist in bekannter Weise ausgebildet und wird daher nicht näher dargestellt.

Fig. 3 zeigt die besondere Anordnung einer Metallplatte 1 und einer schalldämmenden Schicht 7 für eine schallschluckende Decke. In der Metallplatte 1 befindet sich in bekannter Weise eine Vielzahl beispielsweise kreisförmiger Ausstanzungen für den Schalldurchtritt. Die schalldämmende Schicht 7 weist die Form einer Matte auf und ist unmittelbar auf die Metallplatte 1 bzw. auf die mattenförmig angeordneten Röhrchen 4 aufgelegt. Sie besteht bevorzugt aus einem gleichzeitig wärmedämmenden Material, z.B. Steinwolle in einer Dicke von ca. 25 mm. Die Schicht 7 kann ebenfalls über mehrere Metallplatten 1 hinweggeführt werden.

Die Raumdecke beispielsweise nach Fig. 2 kann auch nachträglich unter einer bereits installierten schallschluckenden Decke aufgehängt werden, beispielsweise bei der Sanierung von Altbauten. Hierzu sind die Metallplatten 1 zweckmäßig mit geeigneten Ausstanzungen für den Schalldurchtritt versehen.

Eine verbesserte Schalldämmung wird auch dadurch erreicht, daß auf die Unterseite der mit Ausstanzungen versehenen Metallplatten 1 eine schallabsorbierende mikroporöse Schicht aufgebracht wird, die den Luftdurchtritt praktisch nicht behindert. Diese mikroporöse Schicht kann allein oder zusätzlich zu der schalldämmenden Schicht 7 oberhalb der Metallplatten 1 verwendet werden.

Die gezeigte Raumdecke zu Heiz- und Kühlzwecken läßt sich somit auf einfache Weise montieren und es können Reparaturen an ihr vorgenommen werden, ohne daß die Rohre demontiert werden müssen und ohne daß eine Trennung der Rohre von den Sammelleitungen für die Zu- und Abführung des Heiz- oder Kühlmediums erforderlich ist. Weiterhin werden ausgezeichnete Heiz- bzw. Kühleigenschaften erhalten.

## Patentansprüche

1. Aus Metallplatten und einer Tragekonstruktion für diese bestehende Raumdecke, die von einem Heiz- oder Kühlmedium durchströmbare rohrförmige Leitungen zur Erzielung gewünschter Temperaturwerte innerhalb des Raumes trägt,
**dadurch gekennzeichnet,**
daß die rohrförmigen Leitungen als flexible Röhrchen (4) ausgebildet sind, die mattenförmig zusammengefaßt lose auf den Metallplatten (1) direkt aufliegen.

2. Raumdeckenach Anspruch 1, dadurch gekennzeichnet, daß die Röhrchen (4) aus Kunststoff bestehen.

3. Raumdecke nach Anspruch 1 oder 2, dadurch gekennzeichnet, daß die Röhrchen (4) nur an ihren Vor- und Rücklaufanschlüssen in bezug auf die Raumdecke fixiert sind.

4. Raumdecke nach Anspruch 3, dadurch gekennzeichnet, daß die Vor- und Rücklaufanschlüsse der Röhrchen (4) auf der gleichen Randseite der Raumdecke liegen.

5. Raumdecke nach einem der Ansprüche 1 bis 4, dadurch gekennzeichnet, daß die Röhrchen (4) in ihrer Längsrichtung über mehrere Metallplatten (1) geführt sind.

6. Raumdecke nach einem der Ansprüche 1 bis 5, dadurch gekennzeichnet, daß die Metallplatten (1) zum Zwecke des Schalldurchtritts geeignet geformte Ausstanzungen besitzen.

7. Raumdecke nach Anspruch 6, dadurch gekennzeichnet, daß auf die Röhrchen (4) eine schalldämmende Schicht (7) unmittelbar aufgelegt ist.

8. Raumdecke nach Anspruch 7, dadurch gekennzeichnet, daß die schalldämmende Schicht (7) zugleich wärmeisolierend ist.

9. Raumdecke nach Anspruch 8, dadurch gekennzeichnet, daß die schalldämmende Schicht (7) aus Steinwolle besteht.

10. Raumdecke nach Anspruch 6, dadurch gekennzeichnet, daß sie unter einer fest angeordneten schallabsorbierenden Decke aufgehängt ist.

11. Raumdecke nach einem der Ansprüche 6 bis 10, dadurch gekennzeichnet, daß die Metallplatten (1) auf der Unterseite mit einer schallschluckenden, mikroporösen Schicht bedeckt sind.

## Claims

1. Ceiling consisting of metal plates and a support structure for these, which bears tubular lines, through which a heating or cooling medium flows, for obtaining the desired temperature values inside the room,
characterized in that the tubular lines are in the form of flexible pipes (4), which lie loose, assembled in mat shape, directly on the metal plates (1).

2. Ceiling according to Claim 1, characterized in that the pipes (4) consist of plastic.

3. Ceiling according to Claim 1 or 2, characterized in that the pipes (4) are only fixed by their forward and reverse flow connections in relation to the ceiling.

4. Ceiling according to Claim 3, characterized in that the forward and reverse flow connections of the pipes (4) lie on the same edge of the ceiling.

5. Ceiling according to one of Claims 1 to 4, characterized in that the pipes (4) are brought in their longitudinal direction via several metal plates (1).

6. Ceiling according to one of Claims 1 to 5, characterized in that the metal plates (1) have suitably shaped punched holes for the purpose of the passage of sound.

7. Ceiling according to Claim 6, characterized in that a sound-insulating layer (7) is directly placed on the pipes (4).

8. Ceiling according to Claim 7, characterized in that the sound-insulating layer (7) is thermally insulating at the same time.

9. Ceiling according to Claim 8, characterized in that the sound-insulating layer (7) consists of rock wool.

10. Ceiling according to Claim 6, characterized in that it is suspended below a permanently fixed sound-absorbing ceiling.

11. Ceiling according to one of Claims 6 to 10, characterized in that the metal plates (1) are covered on the underside with a sound-absorbing, microporous layer.

## Revendications

1. Plafond comprenant des plaques métalliques, une construction servant de support, ainsi que des conduits tubulaires au travers desquels circule un medium de chauffage ou de refroidissement permettant de porter la pièce à une température choisie, caractérisé en ce que les conduits sont constitués de petits tuyaux souples (4) rassemblés pour former des nattes posées directement et sans fixation sur les plaques métalliques (1).

2. Plafond selon la revendication 1, caractérisé en ce que les petits tuyaux (4) sont en matière plastique.

3. Plafond selon la revendication 1 ou la revendication 2, caractérisé en ce que les petits tuyaux (4) ne sont fixés sur le plafond qu'en leurs points de raccordement d'arrivée et de retour.

4. Plafond selon la revendication 3, caractérisé en ce que les raccords d'arrivée et de retour des petits tuyaux (4) sont situés du même côté du plafond.

5. Plafond selon l'une quelconque des revendications 1 à 4, caractérisé en ce que les petits tuyaux (4) sont prévus suffisamment longs pour couvrir plusieurs plaques métalliques (1).

6. Plafond selon l'une quelconque des revendications 1 à 5, caractérisé en ce que les plaques métalliques (1) possèdent des orifices de forme appropriée permettant de laisser passer les ondes acoustiques.

7. Plafond selon la revendication 6, caractérisé en ce qu'une couche d'isolant phonique (7) est posée immédiatement sur les petits tuyaux (4).

8. Plafond selon la revendication 7, caractérisé en ce que la couche d'isolant phonique (7) présente également des propriétés d'isolation thermique.

9. Plafond selon la revendication 8, caractérisé en ce que la couche d'isolant phonique (7) est réalisée en laine de roche.

10. Plafond selon la revendication 6, caractérisé en ce qu'il est suspendu en dessous d'un plafond fixe, ayant un effet d'isolation phonique.

11. Plafond selon l'une quelconque des revendications 6 à 10, caractérisé en ce que les plaques métalliques (1) sont recouvertes, sur leur face inférieure, d'une couche micro-poreuse d'isolation phonique.
